# EUROPEAN PATENT APPLICATION

(11) **EP 2 012 485 A1**
(43) Date of publication of application: **07.01.2009**
(21) Application number: 08734080.8
(22) Date of filing: 16.04.2008
(51) Int. Cl.: H04L 12/56

(54) **MANAGEMENT METHOD, APPARATUS AND SYSTEM OF SESSION CONNECTION**

(30) Priority: 12.05.2007 CN 200710074466
(71) Applicant: Huawei Technologies Co., Ltd., Longgang District, Shenzhen Guangdong 518129 (CN)
(72) Inventor: YANG, Zhenting, Shenzhen Guangdong 518129 (CN)
(74) Representative: Hengelhaupt, Jürgen
(86) International application number: PCT/CN2008/070722
(87) International publication number: WO 2008/138242

(57) **Abstract**

A method for managing session connection, including: a session connection endpoint device perceiving a configuration management event of session connection and managing status of the session connection according to the configuration management event. The invention also discloses a server device for session connection and a session communication system.

## Description

This application claims the priority from a Chinese patent application No. 200710074466.6 filed with the Chinese Patent Office on May 12, 2007, entitled "MANAGEMENT METHOD, DEVICE AND SYSTEM FOR SESSION CONNECTION", the entire content of which is incorporated herein by reference.

### Field of the Invention

The present invention relates to the field of communication technologies, and in particular to a management method, device and system for session connection.

### Background of the Invention

The Dynamic Host Configuration Protocol (DHCP) provides a mechanism for specifying Internet Protocol (IP) addresses and configuration parameters dynamically, which is mainly applied to large network environments and locations where it is difficult to implement configuration. Under this protocol, a configuration management server, such as a DHCP server, may specify IP addresses for clients automatically. Although some of the specified configuration parameters are irrelevant to the IP, all configuration information may be managed by the DHCP server in a unified way, because the DHCP configuration can be implemented automatically. The DHCP server not only can assign IP addresses, but also can configure lots of other information, manage leases of the IP addresses, implement time division multiplexing of the IP addresses, and so on. Such configuration parameters facilitate the computer communications over the network. Therefore, the DHCP has been used widely.

The DHCP generally uses a client/server mode. Specifically, a client sends a configuration request to a server, the configuration request containing parameters, including an assigned IP address, a subnet mask, a default gateway, and so on; and the server returns configuration information according to a corresponding policy. The DHCP packets are encapsulated through the User Datagram Protocol (UDP).

The members defined in the DHCP mainly include the following.

DHCP server: providing DHCP services, in which the DHCP server specifies configuration parameters for a DHCP client according to a request from the client, for example, assigns an IP address or selects other network parameters. The DHCP server is generally present as a router, a layer-3 switch, or a special DHCP server.

DHCP relay: a device for relaying DHCP messages between the DCHP server and the DHCP client, and relaying DHCP messages for DCHP servers and DHCP clients within different network segments. For example, upon receiving a DHCP request message sent from the DHCP client, the DHCP relay adds an interface address of the message into the message before forwarding the message, so that the DHCP server may determine of which subnet an IP address needs to be assigned according to the interface address in the received message.

DHCP client: a host within the network for acquiring configuration parameters (such as an IP address) through the DHCP, i.e. a client host or another layer-3 device capable of acquiring an IP address.

An IP session is a network access session established between a session connection client and a session connection endpoint, representing a network access session connection associated with the IP address of a subscriber. The IP session generally terminates at a session connection endpoint, for example, a Broadband Network Gateway (BNG), a Broadband Remote Access Server (BRAS), or a Network Access Server (NAS). The IP address is important for identifying the IP session. IP addresses are generally managed and configured by the DHCP server. In other words, the IP address requested for the IP session is requested from the DHCP server. The IP session is used to manage activities after access of a user to the network, for example, billing management, status management, and so on. The subscriber plays a role in subscription with the network operator. When a customer needs to access the network, he/she needs to make a subscription with the operator, so as to be a subscriber, for example, obtain a user name for network access. One subscriber may be involved in multiple IP sessions. In other words, multiple IP session may be established by one and the same subscriber.

The procedures of an IP session generally include establishment or creation of the session, maintenance or status monitoring of the session, and termination of the session.

A lease is the basis of the whole DHCP process. There is a corresponding lease for each dynamic IP address provided by the DHCP server. The special term "lease" represents a specified period of time within which the DHCP server allows a customer to use a certain IP address. Of course, both the server and the customer may terminate the lease at any time.

When a DHCP client detects that its IP address has been used for a period of time that is over 50% of the lease, if the address lease needs to be extended, the DHCP client usually sends a DHCP request message to a DHCP server. If the DHCP server meets the request, the DHCP server usually sends a DHCP acknowledge message to client, indicating the DHCP client's request has been approved and containing a new lease. When the IP address has been used for a period of time that is close to 87.5% of the lease, if the lease is not updated successfully through the previous request (the request made after the IP address has been used for a period of time that is over 50% of the lease), the DHCP client may try to update the lease again. If this update fails, the DHCP client may try to contact any connectable DHCP server to obtain a valid IP address. If another DHCP server can assign a new IP address for the DHCP client, the DHCP client enters binding status. If the current IP address lease for the DHCP client expires, the DHCP client must release this IP address, reenter initialization status, and repeat the above procedures for obtaining a lease.

Because an IP session is identified by an IP address, and the IP address is generally assigned dynamically by a DHCP server, the DHCP server generally authorizes a lease for the IP address when assigning the IP address, namely, allows the IP address to be valid within a period of time. Within a valid period of time, the IP session must be synchronized with the lease of the IP address. In other words, when the IP address lease expires, the associated IP session must be terminated immediately. Otherwise, a problem may occur that the IP address managed by the DHCP server is not synchronous with the IP address associated with the IP session. For example, when the lease of the address associated with an IP session expires and the client of the IP session does not performs a normal operation for lease extending or the lease extending fails, this IP address may be assigned to an IP session of another subscriber, resulting that the session connection endpoint can not manage the IP session according to the IP address. However, a session connection endpoint at present can not perceive the status of an IP address associated with an IP session, i.e. can not perceive when the lease of the IP address expires and when the IP session needs to be terminated. Consequently, the problem is that the IP address managed by the DHCP server is not synchronous with the IP address associated with the IP session.

### Summary of the Invention

In view of the above problem occurring in the prior art, the invention provides a management method, device and system for session connection, to solve the problem that the IP address managed by a configuration management server is not synchronous with the IP address associated with an IP session.

An embodiment of the invention provides a method for managing session connection, including:
perceiving, by a session connection endpoint device, a configuration management event during the process of session connection; and
managing, by the session connection endpoint device, status of the session connection according to the configuration management event.

Another embodiment of the invention provides a server device for session connection, including:
an event detecting module, adapted to perceive a configuration management event during the process of session connection; and
a status handling module, adapted to manage status of the session connection according to the configuration management event.

Another embodiment of the invention provides a session communication system, including a session connection client device, in communication with a session connection endpoint device and a configuration management server, in which,
the session connection client device is adapted to exchange information with the session connection endpoint device to configure a parameter for session connection;
the session connection endpoint device is adapted to perceive a configuration management event of the session connection, and manage status of the session connection according to the configuration management event; and
the configuration management server is adapted to exchange information with the session connection endpoint device and the session connection client device to provide a configuration parameter for the session connection.

As can be seen from the above technical solutions provided by the embodiments of the invention, with the management method, device and system for session connection according to the embodiments of the invention, a session connection endpoint device perceives a configuration management event during the process of session connection and manages status of the session connection according to the configuration management event,
so that the problem that the IP address managed by a DHCP server is not synchronous with the IP address associated with an IP session may be solved.

### Brief Description of the Drawings

Figure 1 is a schematic diagram illustrating the architecture of a typical application system for an IP session;
Figure 2 is a schematic diagram illustrating a typical process for establishing an IP session according to an embodiment of the invention;
Figure 3 is a schematic diagram illustrating the processing performed when lease extending associated with an IP session succeeds according to an embodiment of the invention;
Figure 4 is a schematic diagram illustrating the processing performed when lease extending associated with an IP session fails according to an embodiment of the invention;
Figure 5 is a schematic diagram illustrating the processing performed when an IP address associated with an IP session conflicts with another according to an embodiment of the invention;
Figure 6 is a schematic diagram illustrating the processing performed when a lease associated with an IP session expires according to an embodiment of the invention;
Figure 7 is a schematic diagram illustrating a device according to an embodiment of the invention; and
Figure 8 is a schematic diagram illustrating a system according to an embodiment of the invention.

### Detailed Description of the Embodiments

The embodiments of the invention will be described with reference to the accompanying drawings.

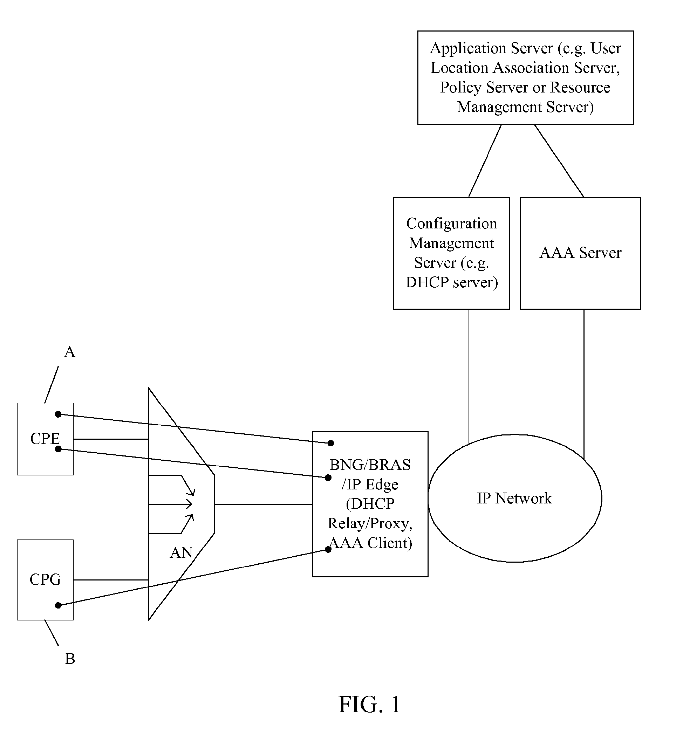

Figure 1 is a schematic diagram illustrating the structure of a typical application system for an IP session.

The CPE/CPG refers to a Customer Premise Equipment/Gateway, for example, a Personal Computer (PC) or a Residential Gateway (RG). The CPE/CPG serves as a session connection client device. Preferably, the CPE/CPG has a session connection configuration client (e.g. a DHCP client) embedded therein. Of course, the session connection client and the session connection configuration client may be located in different devices.

The AN refers to an Access Node.

The BNG, BRAS or IP Edge is a session connection endpoint device, serving as a session connection server, and responsible for session connection management and maintenance, such as establishment, termination and status monitoring. Preferably, the session establishment includes authentication and authorization of the session connection. The session connection endpoint device may function as a DHCP relay or proxy and also as an Authentication, Authorization and Accounting (AAA) client.

The AAA server refers to an Authentication, Authorization and Accounting server. A user may establish an IP session though the above-described architecture. In other words, a user accesses the network through an IP session, an AAA server performs authentication and authorization on the IP session, a configuration management server, such as a DHCP server, specifies parameters such as an address and a gateway, and an application server performs location management, policy management or network resource management on a session of a subscriber. When the subscriber is connected to the network, the AAA server and/or configuration management server sends a session success indication informing the subscriber that the session is established successfully. In addition, the AAA server also bills the subscriber. In this architecture, subscriber A is involved in two session connections and subscriber B is involved in one session connection.

A method for managing session connection according to an embodiment of the invention includes:
a session connection endpoint device perceiving a configuration management event during the process of session connection; and
the session connection endpoint device managing status of the session connection according to the configuration management event.

It needs to be noted that the session connection endpoint device according to the embodiment of the invention includes a BNG, a BRAS, or an IP edge device.

The configuration management event includes, but not limited to, session connection time-out events and configuration information events exchanged between the configuration management server and the session connection client. The configuration information event exchanged between the configuration management server and the session connection client includes lease extending associated with session connection, a session connection associated IP address conflict, or a session connection establishing instruction. The session connection time-out event includes whether a lease of an IP address associated with session connection expires. The lease extending associated with session connection includes lease extending success or failure associated with session connection.

The session connection endpoint device perceiving a configuration management event during the process of session connection includes:
the session connection endpoint device detecting a session connection configuration message, checking the content of the configuration message and triggering a configuration management event; the configuration message including a message sent from the session connection configuration client to the configuration management server or a message sent from the configuration management server to the session connection configuration client, and checking the content of the configuration message including verifying validity and/or legality of the message, analyzing and extracting the content of the message, and so on; or
the session connection endpoint device checking stored status information, and triggering a configuration management event. For example, the session connection endpoint device checks an IP address lease associated with session connection, and upon detecting that the lease expires, triggers a time-out event.

Managing status includes updating status information of the session connection and terminating the session connection. Updating status information of the session connection includes binding a session connection tracking parameter and updating the IP address lease associated with the session connection. Terminating the session connection includes sending a billing stopping message from the session connection endpoint device to a billing server, for example, the AAA server, performing terminating operations on the session connection, and cleaning up local data, for example, stopping keep-alive, clearing Address Resolution Protocol (ARP) entries and so on.

The embodiments of the invention will be described in connection with various scenarios.

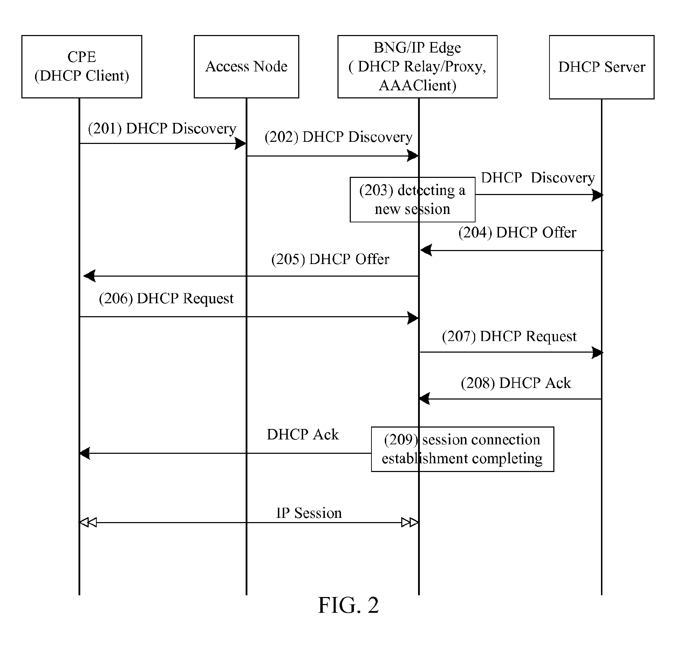

An embodiment of the invention provides a typical process for establishing an IP session. Figure 2 illustrates a typical process for establishing an IP session through the DHCP mechanism according to the embodiment of the invention.

Step 201: A DHCP client begins to request an address by sending an address discovery message, in this example a DHCP discovery message. The DHCP client is located in a session connection client device, such as a CPE/CPG.

Step 202: An access node device connected with the DHCP client receives the address discovery message, performs processing such as Option 82 on the message, and forwards the processed address discovery message.

Step 203: A session connection endpoint device perceives a session connection establishing instruction and triggers a process for establishing session connection. In this example, the session connection endpoint device detects the address discovery message, parses the address discovery message to fetch a session connection tracking parameter, and triggers a process for establishing the session connection. The session connection endpoint device binds the session connection tracking parameter, and stores a session connection tracking record, for example, stores a client link address identifier. The identifier may indicate the association among parameters such as a MAC address, a transaction identifier (xid) and a subscriber identifier. The client link address identifier includes a client hardware address (chaddr), a client identifier or an identity association identifier in the DHCP message. The xid is extracted from a transaction-id field in the header of the DHCP message. The subscriber identifier includes a subscriber account name or an access location identifier. The access location identifier may be obtained from the DHCP Option 82.

Preferably, the session connection endpoint device performs processing such as authentication and authorization with the AAA server and forwards the address discovery message after the processing such as authentication and authorization is completed. The process that the session connection endpoint device performs processing such as authentication and authorization with the AAA server mainly includes that the session connection endpoint device creates an AAA access request message according to the address discovery message, and sends the access request message to the AAA server. The access request message includes at least a subscriber identifier. Upon receiving the access request message, the AAA server responds to the access request message. In particular, the AAA server performs authentication and authorization according to the subscriber identifier carried in the access request message, and generates, according to the result of the authentication and authorization, a corresponding access response message, such as an access accept message sent when the authentication and authorization succeed or an access reject message sent when the authentication and authorization fail, in this example an access accept message. The session connection endpoint device acquires, according to the access response message from the AAA server, a DHCP discovery message associated with the access response message. The session connection endpoint device may acquire a corresponding DHCP discovery message according to the stored subscriber identifier and xid, or according to the subscriber identifier, xid and client link address identifier, and forwards the acquired DHCP discovery message.

It needs to be noted that if the AAA server responds with an access reject message sent when the authentication and authorization fail, the session connection endpoint device acquires a DHCP discovery message associated with the access reject message and stops subsequent processing of the IP session establishment. In other words, the session connection endpoint device deletes the stored session connection tracking record and/or DHCP discovery message.

Step 204: Upon receiving the address discovery message, the DHCP server generates an address offer response message in response to the address discovery message. In this example, the received address discovery message is a DHCP discovery message and the generated address offer response message is a DHCP offer message.

Step 205: The session connection endpoint device detects and forwards the address offer response message, in this example a DHCP offer message.

Step 206: The DHCP client initiates an address request by sending an address request message, in this example a DHCP request message.

Step 207: The session connection endpoint device detects and forwards the address request message. In this example, the forwarded address request message is a DHCP request message.

Step 208: The DHCP server assigns an address upon receiving the address request message and sends an address acknowledge message. In this example, the received address request message is a DHCP request message, and the sent address acknowledge message is a DHCP Ack message.

Step 209: The session connection endpoint device perceives the address acknowledge message, in this example a DHCP Ack message, updates status information of the session connection and forwards the address acknowledge message, in this example a DHCP Ack message.

Preferably, upon perceiving the address acknowledge message, the session connection endpoint device may further performs association verification with the xid, for example, verifies through the xid whether the corresponding subscriber has passed the authentication and authorization. If the association verification succeeds, the session connection endpoint device updates the session connection tracking record.

Preferably, after forwarding the address acknowledge message, the session connection endpoint device may further performs an operation for session connection establishment, such as starting keep-alive monitoring.

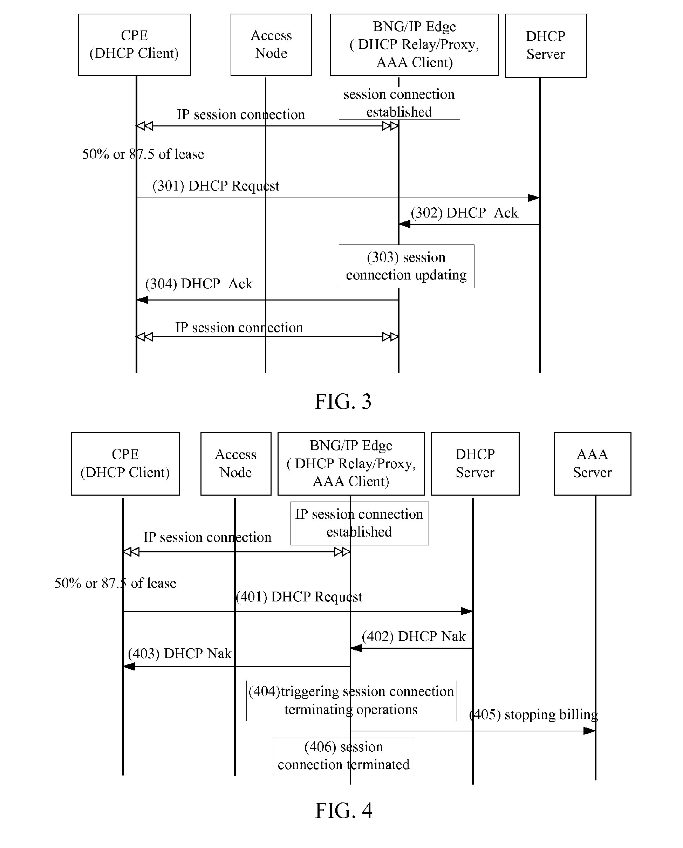

An embodiment of the invention provides the processing performed when lease extending associated with an IP session succeeds, as illustrated in Figure 3, mainly including the following steps.

Step 301: The DHCP client sends a lease extending address request message to the DHCP server, requesting extending of the lease of the address associated with the IP session.
In an example of the invention, the DHCP client may be located in a device such as a user PC, a CPE and an RG, and the lease extending address request message may be a DHCP request message.

Preferably, the processing may also include that the session connection endpoint device perceives a lease extending event associated with the session connection. Specifically, the session connection endpoint device detects the lease extending address request message sent from the DHCP client to the DHCP server, checks the content of the lease extending address request message, in particular, verifies legality and validity of the message, analyzes and extracts the content of the message, and so on, and associates and records information of the lease extending request associated with the IP session. The session connection endpoint device may get aware of the IP session corresponding to the lease extending request according to parameters such as the xid, the client link address identifier and the IP address.

Step 302: The DHCP server receives and processes the lease extending address request message. If the lease extending succeeds, the DHCP server sends a DHCP acknowledge message containing a new lease. By way of example, the DHCP acknowledge message here is a DHCP Ack message.

Step 303: Upon detecting the DHCP acknowledge message from the DHCP server, the session connection endpoint device checks the data content of the message, for example, verifies legality and validity of the message, and analyzes and extracts the content of the message. The session connection endpoint device associates the acknowledge message with a specified session connection according to the content of the acknowledge message, for example, associates the DHCP acknowledge message with a specified session connection according to the IP address contained in the DHCP acknowledge message. Preferably, the processing also includes performing association verification with the xid, for example, verifies through the xid whether the IP session is in lease extended status. If the association verification succeeds, the session connection endpoint device updates status information of the session connection, for example, including the lease of the IP address associated with the session connection.

Step 304: The session connection endpoint device forwards the DHCP acknowledge message to the DHCP client.

It needs to be noted that, by way of example, the session connection endpoint device in the embodiment of the invention is an IP edge device and may also be another device such as a BNG, a BRAS or a NAS in practical applications. This holds for the embodiments described below.

An embodiment of the invention provides the processing performed when lease extending associated with an IP session fails, as illustrated in Figure 4, mainly including the following steps.

Step 401: The DHCP client sends a lease extending address request message to the DHCP server. In an example of the invention, the DHCP client may be located in a device such as a user PC, a CPE and an RG, and the lease extension address request message may be a DHCP address request message.

Preferably, the processing may also include that the session connection endpoint device detects the lease extending address request message sent from the DHCP client to the DHCP server, checks the content of the lease extending address request message, and associates and records information of the lease extending request associated with the IP session.

Step 402: The DHCP server receives the lease extending address request message and performs lease extending processing. If the lease extending fails, the DHCP server sends a non-acknowledge message. In this embodiment, by way of example, the lease extending non-acknowledge message may be a DHCP Nak message.

Step 403: Upon detecting the lease extending non-acknowledge message, the session connection endpoint device checks the data content of the message, and forwards the lease extending non-acknowledge message to the DHCP client.

Step 404: The session connection endpoint device associates the lease extending non-acknowledge message with a specified session connection according to the content of the non-acknowledge message, for example, associates the non-acknowledge message with a specified session connection according to the IP address. Preferably, the processing also includes performing association verification with the xid, for example, verifies through the xid whether there is an IP session corresponding to the lease extending non-acknowledge message. If the association verification succeeds, the session connection endpoint device triggers specified session connection terminating operations.

Step 405: The session connection endpoint device sends a billing stopping message to a billing server.

Step 406: The session connection endpoint device performs the session connection terminating operations, and cleans up local data, for example, stops keep-alive monitoring, clears ARP entries associated with the IP session, and so on.

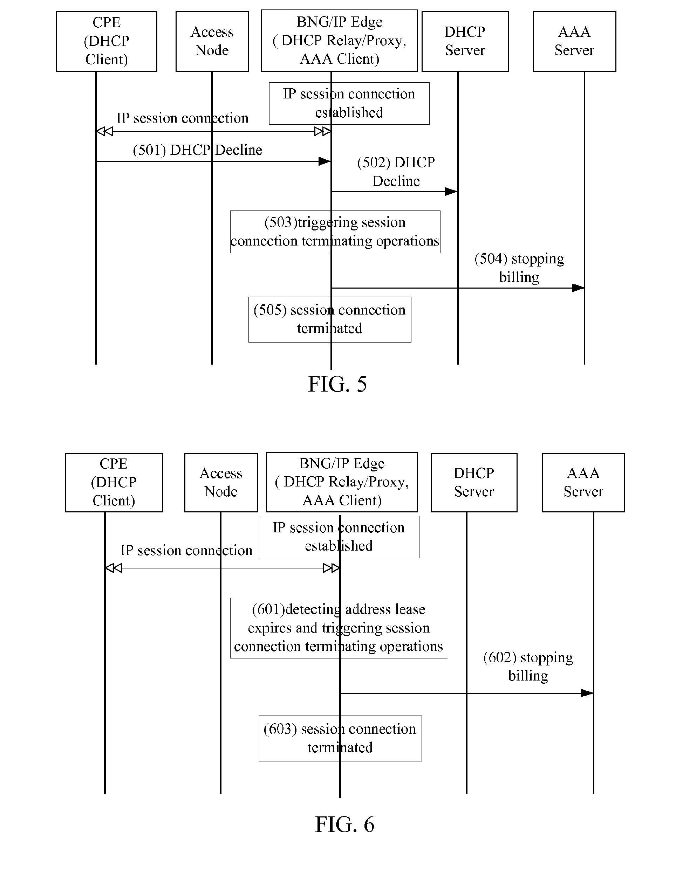

An embodiment of the invention provides the processing performed when an IP address associated with an IP session conflicts with another, as illustrated in Figure 5, mainly including the following steps.

Step 501: The DHCP client device, for example, a user PC or a CPE, sends to the DHCP server an address decline message, in this example a DHCP decline message, indicating that the IP address conflicts with another.

Step 502: Upon detecting the address decline message sent from the DHCP client device to the DHCP server, the session connection endpoint device checks the data content of the message, and forwards the address decline message to the DHCP server.

Step 503: The session connection endpoint device associates the address decline message with a specified session connection according to the content of the address decline message indicating that the IP address associated with the session connection conflicts with another, including associating the address decline message with a specified session connection according to the IP address. If the corresponding specified session connection succeeds, the session connection endpoint device triggers session connection terminating operations.

Step 504: The session connection endpoint device sends a billing stopping message to a billing server, for example, the AAA server.

Step 505: The session connection endpoint device performs the session connection terminating operations, and cleans up local data, for example, stops keep-alive monitoring, clears ARP entries associated with the IP session, and so on.

An embodiment of the invention provides the processing performed when a lease associated with an IP session expires, as illustrated in Figure 6, mainly including the following steps.

Step 601: The session connection endpoint device perceives that a lease associated with an IP session expires, for example by checking stored status information of the session connection, for example, the lease of the IP address associated with the session connection.
The status information of the session connection is preferably obtained from a session connection tracking record. Alternatively, a timer may be set, and the session connection endpoint device may detect that the lease associated with the session connection expires through periodical check by means of the timer. Alternatively, the session connection endpoint device may send a lease query message to the DHCP server. If the queried lease is longer than the locally stored lease, the session connection endpoint device updates the lease and stops subsequent processing, i.e. does not perform subsequent session connection terminating operations. Otherwise, the session connection endpoint device proceeds with the subsequent operations, i.e. triggers the session connection terminating operations.

Step 602: The session connection endpoint device sends a billing stopping message to a billing server.

Step 603: The session connection endpoint device performs the session connection terminating operations, and cleans up local data, for example, stops keep-alive monitoring, clears ARP entries associated with the IP session, and so on.

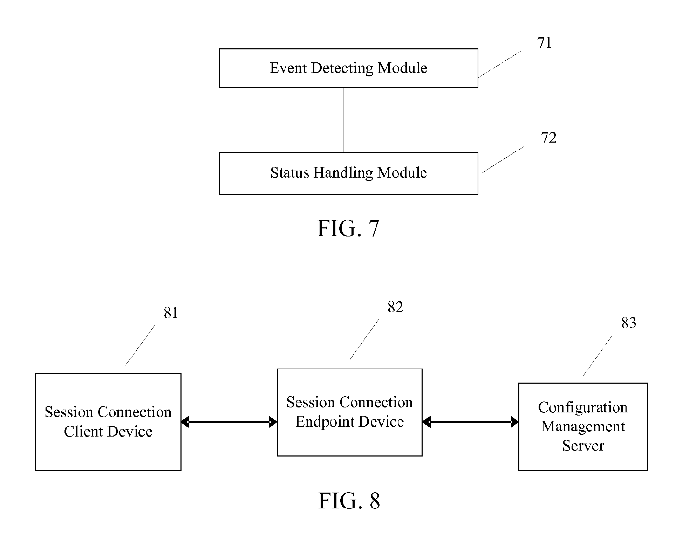

Referring to Figure 7, an embodiment of the invention provides a device for managing session connection.

The device for managing session connection includes an event detecting module 71 and a status handling module 72.

The event detecting module 71 is adapted to perceive a configuration management event of session connection. The configuration management event may include lease extending success for session connection, lease extending failure for session connection, a session connection associated IP address conflict, expiration of a lease associated with session connection, and a session connection establishment instruction.

The status handling module 72 is adapted to perform corresponding status handling operations according to the configuration management event. The status handling operations here include updating status information of session connection and terminating session connection. The description here is only illustrative. In specific implementations of the embodiment of the invention, the status handling operations may also include for example requesting a resource server to release resources, and so on.

For specific actions of the event detecting module 71 and the status handling module 72 described herein, reference may be made to the detailed descriptions taken in conjunction with the above embodiments.

Referring to Figure 8, an embodiment of the invention provides a system for managing session connection, including a session connection client device 81, a session connection endpoint device 82 and a configuration management server 83. The session connection client device 81 is a user-side endpoint of session connection, and may preferably include a session connection configuration client, such as a DHCP client. The session connection client device 81 is adapted to exchange information with the session connection endpoint device 82 to configure a parameter for session connection. The session connection endpoint device 82 is a network-side endpoint of session connection and is adapted to perceive a configuration management event of the session connection and manage status of the session connection according to the configuration management event. The configuration management event described herein includes IP address lease extending associated with session connection, a session connection associated IP address conflict, expiration of an IP address lease associated with session connection, or a response regarding the result of authentication and authorization of session connection. The configuration management server 83 is adapted to exchange information with the session connection endpoint device 82 and the session connection configuration client to configure parameter operations for the session connection.

For specific processes of the operations and information exchange, reference may be made to the detailed descriptions taken in conjunction with the above embodiments.

The present invention has been described and illustrated with reference to the preferred embodiments thereof. It shall be recognized by those skilled in the art that those embodiments are merely illustrative and not restrictive, that the present invention shall not be limited thereto, and that various variations and substitutions can be made thereto in light of the disclosure of the embodiments of the invention without departing from the scope of the present invention as defined by the following claims.

## Claims

1. A method for managing session connection, comprising:
perceiving, by a session connection endpoint device, a configuration management event of a session connection; and
managing, by the session connection endpoint device, a status of the session connection according to the configuration management event.

2. The method according to claim 1, wherein perceiving, by a session connection endpoint device, a configuration management event of a session connection comprises:
perceiving, by the session connection endpoint device, the configuration management event of the session connection by detecting a session connection message; or
perceiving, by the session connection endpoint device, the configuration management event of the session connection by checking stored status information; or
sending, by the session connection endpoint device, a query message to a configuration management server and perceiving the configuration management event of the session connection according to queried information.

3. The method according to claim 1, wherein the configuration management event comprises at least one selected from the group consisting of IP address lease extending success associated with the session connection, IP address lease extending failure associated with the session connection, a session connection associated IP address conflict, and expiration of an IP address lease associated with the session connection.

4. The method according to claim 1, wherein managing status of the session connection comprises: terminating the session connection or updating status information of the session connection.

5. The method according to any of claims 1 to 4, wherein if the configuration management event is IP address lease extending success associated with the session connection, managing, by the session connection endpoint device, status of the session connection according to the configuration management event comprises:
updating, by the session connection endpoint device, status information of the session connection according to a detected lease extending success message from the configuration management server.

6. The method according to any of claims 1 to 4, wherein if the configuration management event is a session connection associated IP address conflict or IP address lease extending failure associated with the session connection, managing, by the session connection endpoint device, status of the session connection according to the configuration management event comprises:
performing, by the session connection endpoint device, terminating operations on status information of the session connection according to a detected message indicating the session connection associated IP address conflict or the detected lease extending failing message from the configuration management server.

7. The method according to any of claims 1 to 4, wherein if the configuration management event is expiration of an IP address lease associated with the session connection, managing, by the session connection endpoint device, status of the session connection according to the configuration management event comprises:
performing, by the session connection endpoint device, terminating operations on the session connection according to stored status information obtained through check or upon perceiving the lease expires depending upon information queried from the configuration management server.

8. A server device for session connection, comprising:
an event detecting module, adapted to perceive a configuration management event of a session connection; and
a status handling module, adapted to manage a status of the session connection according to the configuration management event.

9. The device according to claim 8, wherein managing a status of the session connection according to the configuration management event comprises: performing terminating or status updating operations on the session connection.

10. The device according to claim 8 or 9, wherein the device is a broadband network gateway, a broadband remote access server or an Internet Protocol (IP) edge device.

11. The device according to claim 8, wherein
the event detecting module is adapted to perceive the configuration management event of the session connection by detecting a session connection message; or
the event detecting module is adapted to perceive the configuration management event of the session connection by checking stored status information; or
the event detecting module is adapted to send a query message to a configuration management server and perceive the configuration management event of the session connection according to queried information.

12. The device according to claim 11, wherein the configuration management event comprises at least one selected from the group consisting of IP address lease extending success associated with the session connection, IP address lease extending failure associated with the session connection, a session connection associated IP address conflict, and expiration of an IP address lease associated with the session connection.

13. A session communication system, comprising a session connection client device, in communication with a session connection endpoint device and a configuration management server, wherein
the session connection client device is adapted to exchange information with the session connection endpoint device to configure a parameter for a session connection;
the session connection endpoint device is adapted to perceive a configuration management event of the session connection, and manage status of the session connection according to the configuration management event; and
the configuration management server is adapted to exchange information with the session connection endpoint device and the session connection client device to provide the configuration parameter for the session connection.

14. The system according to claim 13, wherein the session connection endpoint device includes at least one selected from the group consisting of a broadband network gateway, a broadband remote access server and an Internet Protocol (IP) edge device.

15. The system according to claim 13, wherein the configuration management server is a dynamic host configuration protocol server.

16. The system according to claim 13, wherein
the session connection endpoint device is adapted to perceive the configuration management event of session connection by detecting a session connection message;
the session connection endpoint device is adapted to perceive the configuration management event of the session connection by checking stored status information; or
the session connection endpoint device is adapted to send a query message to the configuration management server and perceive the configuration management event of the session connection according to queried information.
